# FASCICULE DE BREVET EUROPEEN

(11) **EP 0 783 999 B1**
(45) Date de publication et mention de la délivrance du brevet: **20.10.1999**
(21) Numéro de dépôt: 97400032.5
(22) Date de dépôt: 08.01.1997
(51) Int. Cl.: B60S 1/38, B21D 53/88

(54) **Procédé pour la fabrication de balais d'essuie-glaces à déflecteurs**
Herstellungsverfahren für Scheibenwischer mit Windableiter
Method of manufacturing windscreen wiper blades which have a deflector

(30) Priorité: 15.01.1996 FR 9600366
(43) Date de publication de la demande: 16.07.1997
(73) Titulaire: Société Noiséenne Outillage de Presse S.N.O.P. SA, 93130 Noisy Le Sec (FR)
(72) Inventeur: Combes, Patrice, 43100 Brioude (FR)
(74) Mandataire: Cabinet HERRBURGER

(56) Documents cités:
- EP-A- 0 565 443
- DE-A- 3 926 714
- FR-A- 2 563 482
- GB-A- 2 030 850
- US-A- 3 772 730

## Description

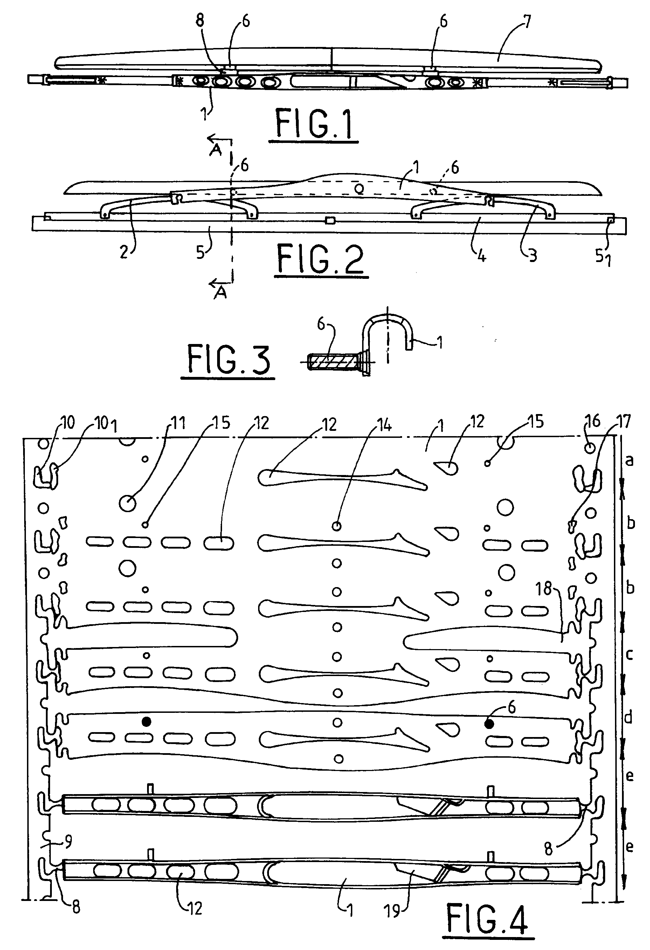

Les balais d'essuie-glaces à déflecteurs comportent, voir figures 1 et et 2, une monture 1 recevant de manière pivotante, à ses extrémités, deux palonniers intermédiaires 2 et 3 supportant eux-mêmes à pivotement le palonnier principal 4 sur lequel est fixé par des crochets 5₁ ou similaire, le balai d'essuie-glace proprement dit 5.

Sur l'un des rebords de la monture 1 sont également prévus deux goujons 6 qui sont orientés transversalement au balai, vers l'extérieur, afin de supporter un déflecteur 7.

Lors du montage des balais, les goujons 6 reçoivent tout d'abord une bague entretoise 8 puis le déflecteur est fixé sur les goujons par un écrou.

Suivant le procédé connu mis en oeuvre pour réaliser ces essuie-glaces, les goujons 6 sont fixés par sertissage sur chaque monture 1 prise individuellement, alors que la monture est terminée, c'est-à-dire découpée, pliée et cambrée. Or, cela entraîne de nombreux inconvénients et contraintes.

Ainsi, ce sertissage constitue une opération nécessitant la manipulation individuelle des montures les unes après les autres, d'où une répercussion sur les coûts de fabrication. En outre, ce sertissage des goujons sur des montures terminées est susceptible de produire une déformation inacceptable de la pièce. Enfin, la solidité de fixation des goujons par sertissage doit être considérée comme étant à sa limite minimale étant donné que cette opération de sertissage a lieu sur un outillage de reprise sur lequel les montures sont amenées individuellement les unes après les autres.

Il convient par ailleurs de noter que cette monture doit subir une opération de peinture après avoir reçu ces goujons 6. Or, étant donné que les goujons sont fixés sur des montures séparées les unes des autres, l'opération de peinture ultérieure entraîne obligatoirement leur manipulation individuelle, ce qui entraîne également une augmentation du coût.

La présente invention a notamment pour but de remédier à ces inconvénients et concerne à cet effet un procédé de réalisation de balais d'essuie-glaces à déflecteur comportant une monture supportant le balai d'essuie-glace par l'intermédiaire de palonniers, cette monture étant également pourvue de goujons supportant la bavette déflectrice, procédé caractérisé en ce qu'on réalise la monture par des opérations successives de poinçonnage, découpage, pliage, cambrage et autres d'une bande de métal à l'aide d'un outil à suivre de manière, tout d'abord à former à plat sur la bande une succession d'ébauches parallèles reliées aux bords de la bande par des ponts de métal, on met ensuite en place et on sertit les goujons dans les perçages poinçonnés à cet effet, la bande de métal étant toujours à plat, puis on réalise les pliage et cambrage des ébauches pourvues de leur goujon afin d'obtenir des montures encore reliées les unes aux autres par les ponts de jonction aux bords de la bande.

Selon un mode de réalisation de l'invention, les bandes de montures pourvues de leurs goujons de support des déflecteurs sont soumises à une opération de peinture.

L'invention est représentée à titre d'exemple non limitatif sur les dessins ci-joints dans lesquels :
- la figure 1 est une vue de dessus d'un balai d'essuie-glace à déflecteur de type connu,
- la figure 2 est une vue de dessus de la figure 1,
- la figure 3 est une coupe suivant A-A de la monture de la figure 2,
- la figure 4 illustre le procédé de l'invention dans ses diverses étapes de travail d'une bande de métal sur un outil à suivre.

La présente invention a en conséquence pour but la réalisation, à moindre coût, d'un balai d'essuie-glace à déflecteur d'une bonne solidité, la monture de ce balai d'essuie-glace étant exempte de déformation.

Cette monture 1 est réalisée sur un outil à suivre à l'aide duquel on réalise, suivant les pas d'avancement successifs a, b, c, d, et e, les diverses opérations de découpage, poinçonnage, perçage, pliage, cambrage et autres, etc. pour aboutir à une monture 1 terminée et sur laquelle il ne reste plus qu'à réaliser l'opération de peinture. Ces montures sont, à la suite de ces opérations, encore maintenues parallèlement les unes aux autres par des ponts de jonction 8 formés lors des opérations de découpage susdites et qui relient les montures entre elles par l'intermédiaire des bords 9 de la bande.

Ainsi, un nombre déterminé de montures, par exemple une trentaine, reliées les unes aux autres par les ponts 8 et les bords 9, peuvent être aisément et rapidement manipulées pour subir les opérations de peinture au bain sans par ailleurs que les dispositifs d'accrochage en prise sur les bords 9 de la bande ne puissent laisser une marque sur la peinture des montures elles-mêmes.

Selon le procédé illustré, on réalise tout d'abord, aux pas d'avancement a et b, le poinçonnage de la bande pour réaliser tous les trous nécessaires 11, 12, 13, 14, 15 et 16, ces trous comprenant par exemple les trous 11 destinés aux goujons pilotes, les trous 14 et 17 destinés aux axes de montage et les trous 15 destinés au goujon 6 de support du déflecteur 7.

Egalement, ces premières opérations de poinçonnage réalisent le marquage latéral par estampage de la bande en 10₁, ces marquages 10₁ jouxtant des poinçonnages 10. Ces poinçonnages 10 sont destinés à découper l'un des bords des ponts de jonction 8 alors que l'estampage 10₁ a pour but de réaliser une diminution locale de l'épaisseur de ces jonctions 8 afin de faciliter la séparation ultérieure des montures 1 et des bords latéraux 9 par cassure des ponts 8 à hauteur de leur jonction avec les extrémités de ces montures.

Au cours d'une étape suivante c, l'outillage à suivre réaliser les opérations de poinçonnage et découpage en 18 afin de réaliser le détourage de la bande suivant le contour à plat de la monture en laissant subsister bien entendu les ponts de jonction 8.

Ensuite, au cours de plusieurs pas d'avancement d, la bande subit une opération d'écrasement afin d'éliminer les bavures résultant des poinçonnages et découpages précédents et les goujons 6 sont mis en place et sertis dans les perçages 15 réalisés précédemment. Cette opération de sertissage est réalisée alors que les montures sont encore à l'état développé à plat et reliées les unes aux autres par les ponts de jonction 8 et les bords 9.

De préférence, cette opération de sertissage s'effectue en deux temps, tout d'abord une mise en place et un présertissage du goujon puis, ensuite, un sertissage final, la bande étant toujours à plat.

Cette opération effectuée sur une pièce de métal à plat permet d'obtenir une fixation solide des goujons sur la pièce, cette opération étant en outre effectuée en temps compensé pendant que l'outil à suivre réalise les autres opérations sur la bande de métal pour obtenir la monture 1.

Simultanément, les étapes suivantes de travail de la bande de métal réalisent le cambrage de la pièce sur sa longueur, le pliage et le calibrage de la monture en largeur, la frappe d'un renfort en 19, la refrappe des ajours 12 pour obtenir un bel aspect de la pièce finie, un précisaillage des montures à leurs extrémités à hauteur des ponts de jonction 8 afin de faciliter leur séparation ultérieure puis la découpe de cette bande de montures pour former des ensembles d'une trentaine de montures qui peuvent alors être soumises à l'opération de peinture.

La monture ainsi réalisée recevra alors comme cela est habituel, le palonnier intermédiaire 3, le palonnier principal 4 avec le balai d'essuie-glace 5 ainsi que le déflecteur 7 et les bagues d'entretoise 8.

## Revendications

1. Procédé de réalisation de balais d'essuie-glaces à déflecteur comportant une monture (1) supportant le balai d'essuie-glace (5) par l'intermédiaire de palonniers (3, 4), cette monture étant également pourvue de goujons (6) supportant la bavette déflectrice (7), procédé caractérisé en ce qu'on réalise la monture par des opérations successives de poinçonnage, découpage, pliage, cambrage et autres d'une bande de métal à l'aide d'un outil à suivre de manière, tout d'abord à former à plat sur la bande une succession d'ébauches parallèles reliées aux bords de la bande (9) par des ponts de métal (8), on met ensuite en place et on sertit les goujons (6) dans les perçages (15) poinçonnés à cet effet, la bande de métal étant toujours à plat, puis on réalise les pliage et cambrage des ébauches pourvues de leur goujon afin d'obtenir des montures encore reliées les unes aux autres par les ponts de jonction (8) aux bords de la bande.

2. Procédé conforme à la revendication 1, caractérisé en ce que les bandes de montures (1) pourvues de leurs goujons (6) de support des déflecteurs (7) sont soumises à une opération de peinture.

3. Les montures et les essuie-glaces obtenus par la mise en oeuvre du procédé conforme à l'une quelconque des revendications précédentes.

## Claims

1. Method of manufacturing windscreen wiper blades having a deflector and comprising a mounting (1) supporting the windscreen wiper blade (5) by way of swing bars (3, 4), the mounting also being provided with pins (6) supporting the deflector flap (7), which method is characterised in that the mounting is produced by successive operations of punching, cutting, folding, bending, and others, a strip of metal with the aid of a gang die, in such a manner as, first, to form flat on the strip a succession of parallel blanks connected to the edges of the strip (9) by metal bridges (8), the pins (6) are then placed in the holes (15) punched out for that purpose and crimped therein, the strip of metal still being flat, and then the operations of folding and bending the blanks provided with their pins are carried out in order to obtain mountings which are still connected to one another by the joining bridges (8) at the edges of the strip.

2. Method according to claim 1, characterised in that the strips of mountings (1) provided with their pins (6) for supporting the deflectors (7) are subjected to a painting operation.

3. The mountings and the windscreen wipers obtained by implementing the method according to any one of the preceding claims.

## Patentansprüche

1. Herstellungsverfahren für Scheibenwischer mit Windableiter, der einen Halter (1) umfasst, der den Scheibenwischer (5) mit Hilfe von Armen (3, 4) trägt, wobei dieser Halter ebenfalls Stiftbolzen (6) aufweist, die den Ableitflügel (7) tragen, Verfahren, dadurch gekennzeichnet, dass der Halter durch aufeinanderfolgende Schleif-, Ausstanz-, Falt-, Biege- und andere Vorgänge aus einem Metallstreifen mit Hilfe eines Folgewerkzeugs hergestellt wird, derart, dass zunächst flach aus dem Streifen eine Folge von parallelen Rohlingen geformt werden, die mit den Rändern des Streifens (9) durch Metallbrücken (8) verbunden sind, dann werden die Stiftbolzen (6) in die Locher (15) eingesetzt und umgelegt, die zu diesem Zweck ausgestanzt wurden, wobei der Metallstreifen nach wie vor flach ist, dann erfolgen Falten und Biegen der mit den Stiftbolzen versehenen Rohlinge, um Halter zu erhalten, die noch über Verbindungsbrücken (8) an den Rändern des Streifens miteinander verbunden sind.

2. Verfahren nach Patentanspruch 1, dadurch gekennzeichnet, dass die mit ihren Stiftbolzen (6) zum Tragen der Ablenker (7) versehenen Halterstreifen (1) einem Lackiervorgang unterworfen werden.

3. Halter und Scheibenwischer, die durch Anwendung des Verfahrens nach irgendeinem der vorangehenden Patentansprüche hergestellt wurden.
